# EUROPEAN PATENT APPLICATION

(11) **EP 4 752 740 A2**
(43) Date of publication of application: **03.06.2026**
(21) Application number: 25212011.8
(22) Date of filing: 29.10.2025
(51) Int. Cl.: G06F 13/42, G06F 13/38

(54) **SIDE SIDEBAND INTERFACE**

(30) Priority: 14.11.2024 US 202418947772
(71) Applicant: Google LLC, Mountain View, CA 94043 (US)
(72) Inventor: Gelb, Benjamin Steel, Sunnyvale, California, 94087 (US); Chen, Xi, Mountain View, California, 94043 (US); Maloney, Patrick, Mountain View, California, 94043 (US); Zhang, Yifan, Mountain View, California, 94043 (US)
(74) Representative: Betten & Resch

(57) **Abstract**

Aspects of the disclosure are directed to a side sideband interface (SSBI). The SSBI is a die-to-die (D2D) interface configured for various protocols to enable cross-die communication with higher robustness and flexibility and lower cost. The SSBI includes a control status register (CSR) wrapper containing the CSRs for configuring and monitoring the SSBI, a protocol handler for converting the various protocols both to and from a standard streaming interface as well as performing arbitration, and a link layer for performing serialization and deserialization of data as well as flow control management and error detection.

## Description

### BACKGROUND

There is an increasing demand for high-speed die-to-die (D2D) communication in system on chips (SoCs), necessitating a robust and flexible D2D solution for the initialization and configuration of high-bandwidth D2D interfaces like universal chiplet interconnect express (UCle). However, existing solutions like inter-integrated circuit (I2C), improved inter-integrated circuit (I3C), or quad serial peripheral interface (QSPI) can have high pin counts, low speed, require extra adapters and configuration to utilize additional protocols, require a clock relationship between respective dies, and/or handle errors in a complicated manner.

### BRIEF SUMMARY

Aspects of the disclosure are directed to a side sideband interface (SSBI). The SSBI is a die-to-die (D2D) interface configured for various protocols to enable cross-die communication with higher robustness and flexibility and lower cost. The SSBI includes a control status register (CSR) wrapper containing the CSRs for configuring and monitoring the SSBI, a protocol handler for converting the various protocols both to and from a standard streaming interface as well as performing arbitration, and a link layer for performing serialization and deserialization of data as well as flow control management and error detection.

Compared to existing solutions, the SSBI has lower pin counts, has higher speed, has better interface scalability, is clock agnostic, is more robust, and/or has better flow control and configurability. For example, the SSBI can utilize a serial single bit interface to efficiently communicate with two pins per direction. The SSBI can accommodate a wide range of bus protocols, including industry standard protocols as well as proprietary or user-defined protocols. The SSBI can be ready to use out of reset without requiring any firmware programming. The SSBI can operate without a clock synchronization between dies. The SSBI can incorporate error handling mechanisms to ensure the integrity of the interface, particularly that transactions are completed. The SSBI can implement a credit-based flow control to prevent traffic loss. The SSBI can offer flexible configurations, such as for data transfer rate, timeout duration, receiver sampling delay, parity checks, and/or any other parameters.

Aspects of the disclosure provide for a side sideband interface SSBI, including: a protocol handler configured to convert multiple protocols into a streaming protocol and perform arbitration or demultiplexing on various transactions; and a link layer comprising a plurality of finite state machines (FSMs) configured to serialize data to be transmitted, deserialize data being received, and maintain a credit-based flow control.

In some examples, the SSBI further includes a control status register (CSR) wrapper containing a plurality of CSRs for configuring the protocol handler and link layer.

In some examples, the protocol handler further includes a target interface converter configured to: receive a data request in a first protocol and convert the request into the streaming protocol; and receive a data response in the streaming protocol and convert the data response into the first protocol; wherein the target interface converter is configured to assert an error interrupt when the data response is not received within a predetermined amount of time. In some examples, the protocol handler further includes an initiator interface converter configured to: receive a data request in the streaming protocol and convert the data request into a first protocol; and receive a data response in the first protocol and convert the response into the streaming protocol; wherein the initiator interface converter is configured to assert an error interrupt when the data response is not received within a predetermined amount of time.

In some examples, the protocol handler further includes a protocol arbitrator configured to receive a plurality of data requests and push a data request of the plurality of data requests to the link layer via a round-robin scheme. In some examples, the protocol handler further includes a protocol demultiplexer configured to distribute data responses based on their transaction protocol.

In some examples, the link layer further includes a source clock pin and a source data pin. In some examples, the link layer includes a transmission FSM (TX FSM) configured to serialize a data request through the source data pin bit by bit while the source clock pin indicates there is valid data to sample per cycle. In some examples, the TX FSM contains a credit when there is no data request to send and does not contain a credit when a transmission is in process, the TX FSM being configured to trigger a timeout error when the TX FSM does not contain the credit for a predetermined amount of time.

In some examples, the link layer further includes a target clock pin and a target data pin. In some examples, the link layer includes a receiver FSM (RX FSM) configured to deserialize a data response through the target data pin bit by bit while the target clock pin indicates there is valid data to sample per cycle. In some examples, the RX FSM is configured to trigger a timeout error when the RX FSM does not receive a data packet within a predetermined amount of time. In some examples, the RX FSM is configured to drop data of the data packet already received and not send a credit back to a TX FSM when an error is triggered.

Aspects of the disclosure further provide for a method for transmitting data via a side sideband interface (SSBI) including: receiving, by a target interface converter of a protocol handler of the SSBI, a data request in a first protocol; converting, by the target interface converter, the data request from the first protocol into a streaming protocol; selecting, by a protocol arbiter of the protocol handler, the data request for transmission; and serializing, by a transmitter finite state machine (TX FSM) of a link layer of the SSBI, the data request through a source data pin bit by bit while a source clock pin indicates there is valid data to sample per cycle. Aspects of the disclosure further provide for a system including: one or more processors; and one or more storage devices coupled to the one or more processors and storing instructions that, when executed by the one or more processors, cause the one or more processors to perform operations for the method for transmitting data via the SSBI. Aspects of the disclosure further provide for a computer program including instructions that, when executed by one or more processors, cause the one or more processors to perform operations for the method for transmitting data via the SSBI.

In some examples, the method further includes: receiving, by a target initiator converter of the protocol handler, a data response in the first protocol; converting, by the target initiator converter, the data response from the first protocol into the streaming protocol; selecting, by the protocol arbiter, the data response for transmission; and serializing, by the TX FSM, the data response through the source data pin bit by bit while the source clock pin indicates there is valid data to sample per cycle. In some examples, the method further includes triggering, by the target interface converter, a timeout error when a data response is not received within a predetermined amount of time. In some examples, the method further includes triggering, by the TX FSM, a timeout error when the TX FSM does not contain a credit for a predetermined amount of time.

Aspects of the disclosure also provide for a method for receiving data via a side sideband interface (SSBI) including: deserializing, by a receiver finite state machine (RX FSM) of a link layer of the SSBI, a data response through a target data pin bit by bit while a target clock pin indicates there is valid data to sample per cycle; distributing, by a protocol demultiplexer of a protocol handler of the SSBI, the data response based on a transaction protocol of the data response; converting, by a target interface converter of the protocol handler, the data response from a streaming protocol into a first protocol; and outputting, by the target interface converter, the data response in the first protocol. Aspects of the disclosure also provide for a system including: one or more processors; and one or more storage devices coupled to the one or more processors and storing instructions that, when executed by the one or more processors, cause the one or more processors to perform operations for the method for receiving data via the SSBI. Aspects of the disclosure also provide for a computer program including instructions that, when executed by one or more processors, cause the one or more processors to perform operations for the method for receiving data via the SSBI.

In some examples, the method further includes: deserializing, by the RX FSM, a data request through a target data pin bit by bit while a target clock pin indicates there is valid data to sample per cycle; distributing, by the protocol demultiplexer, the data request based on a transaction protocol of the data request; converting, by an initiator interface converter of the protocol handler, the data request from the streaming protocol into the first protocol; and outputting, by the initiator interface converter, the data request in the first protocol. In some examples, the method further includes triggering, by the RX FSM, a timeout error when the RX FSM does not deserialize the data response within a predetermined amount of time. In some examples, the method further includes triggering, by a TX FSM of the link layer, a timeout error based on the RX FSM triggering a timeout error.

### BRIEF DESCRIPTION OF THE DRAWINGS

FIG. 1 depicts a block diagram of an example side sideband interface according to aspects of the disclosure.
FIG. 2 depicts a block diagram of an example protocol handler according to aspects of the disclosure.
FIG. 3 depicts a block diagram of an example link layer according to aspects of the disclosure.
FIG. 4 depicts a block diagram of an example transmitter finite state machine according to aspects of the disclosure.
FIG. 5 depicts a block diagram of example transmitter finite state machine logic according to aspects of the disclosure.
FIG. 6 depicts a block diagram of an example receiver finite state machine according to aspects of the disclosure.
FIG. 7 depicts a block diagram of example receiver finite state machine logic according to aspects of the disclosure.
FIG. 8 depicts a block diagram of an example integrated circuit implementing a side sideband interface according to aspects of the disclosure.
FIG. 9 depicts a block diagram of an example environment for the integrated circuit according to aspects of the disclosure.
FIG. 10 depicts a flow diagram of an example process for transmitting data requests using a side sideband interface according to aspects of the disclosure.
FIG. 11 depicts a flow diagram of an example process for transmitting data responses using a side sideband interface according to aspects of the disclosure.
FIG. 12 depicts a flow diagram of an example process for receiving data responses using a side sideband interface according to aspects of the disclosure.
FIG. 13 depicts a flow diagram of an example process for receiving data requests using a side sideband interface according to aspects of the disclosure.

### DETAILED DESCRIPTION

The technology relates generally to a die to die (D2D) interface, referred to herein as a side sideband interface (SSBI). The SSBI can be configured for a wide variety of protocols to enable reliable cross-die communication, such as for multi-die system on chip (SOC) architectures. The protocols can be standard protocols and/or user-defined protocols.

The SSBI can include one or more of the following advantages. No firmware programming is required as the SSBI module is ready to use right out of reset. SSBIs on respective dies do not need a clock relationship, e.g., a frequency or phase relationship, to communicate. If an error occurs, such as a transfer or logical error, transactions can still be completed with an error response while the SSBI is ensured to be in a good state. SSBI can self-recover after error detection and handling. SSBIs can automatically try to establish communication with each other. If the establishment is successful, the SSBIs can automatically release flow control to upstream protocols. If the establishment is unsuccessful after several attempts, the SSBI can flag the error so users are aware and can take proper action. The SSBI has a credit-based flow control to ensure traffic is not dropped. The SSBI is configurable, including configurable data transfer rates, timeout duration, receiver sampling delays, and/or parity checks, as examples. The SSBI supports any number of standard and/or user-defined bus protocols at the protocol interface and can convert them to intra-die communication protocols.

The SSBI includes a control status register (CSR) wrapper, a protocol handler, and a link layer. The CSR wrapper contains the CSRs of the SSBI. The protocol handler converts user defined protocols to an SSBI streaming interface and performs arbitration. The link layer performs serialization of data to be transmitted, deserialization of data that is received, maintenance of flow control, and error detection and reporting. Two SSBIs can be connected via pins in their respective link layers. A source clock pin can be connected to a target clock pin and a source data pin can be connected to a target data pin.

The CSR wrapper includes CSRs for configuring the SSBI. Example CSRs for the protocol handler include a request timeout predetermined value, a request timeout error value, and a status value. Example CSRs for the TX FSM include a source clock pin frequency, a skew of the source clock pin, a skew of the source data pin, a wait period between flits, a transmission timeout value, a transmission time error value, and a TX FSM status value. Example CSRs for the RX FSM include an ingress timeout value, an ingress timeout error value, an egress timeout value, an egress timeout error value, a parity check enablement, a parity error, and a RX FSM status value.

The protocol handler manages protocol related processing and interacts with the link layer via any standard interface. The protocol handler includes one or more target interface converters, one or more initiator interface converters, arbitration logic, and demultiplex logic. The target interface converters and initiator interface converters can support the same or different protocols. Example protocols can include standard protocols, e.g., advanced peripheral bus (APB) or advanced extensible interface (AXI), and/or user-defined protocols.

The target interface converter can receive various protocol requests and packetize the requests for transmission arbitration. The target interface converter may support one or more outstanding requests, which can be reads or writes. The target interface converter may include a timeout feature to assert an error interrupt when a response is not received within a predetermined amount of time. After the target interface converter receives response data and status, the target interface converter converts the responses to the various protocols and replies to the request. For example, an APB target interface converter may convert the response to an APB protocol response while an AXI target interface converter may convert the response to an AXI protocol response.

The initiator interface converter can convert requests from crossing die to various protocol requests and issue the requests downstream. For example, an APB initiator interface converter may convert the request to the APB protocol while an AXI initiator interface converter may convert the request to the AXI protocol. The initiator interface converter can wait until a response comes back or a timeout occurs to free itself for the next request. If a timeout occurs, the initiator interface converter can send an error response upstream to inform there is a malfunction downstream before resetting itself to the idle state.

The initiator interface converters and target interface converters can be for the same or different protocols. For example, an initiator interface converter can be configured for AXI while a target interface converter can be configured for APB.

The arbitration logic can be a protocol arbiter configured to arbitrate any ingress valid requests and push the requests to egress ports connected to the link layer. An example arbitration scheme can be a round-robin arbitration, though other arbitration schemes can occur as configured by the user. The protocol arbiter can include one or more ingress ports, where each ingress port may support the same or a different protocol. Example protocols can include standard protocols, e.g., APB or AXI, and/or user-defined protocols. These ingress ports can have different data widths while the egress port can have a fixed data width. The egress interface can include flow control signals and a data interface to connect to the link layer.

The demultiplex logic can be a protocol demultiplexer configured to decode protocol packets from the link layer based on the type of transaction specified in the packet and distribute the packets to the corresponding channels. The demultiplexer can include one ingress port from the link layer and one or more egress ports, where each egress port may support the same or a different protocol. Example protocols can include standard protocols, e.g., APB or AXI, and/or user-defined protocols.

The link layer transfers data across dies. The link layer includes a transmitter finite state machine (TX FSM) and a receiver FSM (RX FSM) as well as synchronization logic. The link layer can be protocol agnostic for the various protocols handled by the protocol handler.

The TX FSM side uses data and request/acknowledgement flow control. The request is asserted when there is a valid flit requiring a cross die transfer. A flit refers to a flow control unit or flow control digit that is part of a network packet or stream. The acknowledgement is asserted when the transfer is complete in the link layer, e.g., the transferred data is accepted by the remote die such that the TX FSM receives a credit back from the remote die. A timeout is asserted when the acknowledgement is not asserted within a predetermined amount of time. The timeout may indicate the current transfer did not finish correctly, e.g., from an erroneous transfer or parity error.

The transfer side of the link layer includes output pins and input pins. The output pins can be a source clock pin and source data pin, and the input pins can be a target clock pin and target data pin.

The TX FSM is configured as a serializer to send input data over the two output pins: source clock and source data. The TX FSM receives input data and serializes the input data through the source data pin bit by bit. The source clock pin is configured as a strobe to indicate the current cycle has valid data to sample while the source data pin carries the actual data. The frequency of the source clock pin and source data pin is controlled via a CSR in the CSR wrapper. For example, if the frequency is 4, generating one source clock period takes 8 real clock cycles (4-cycles high and 4-cycles low). On the source data pin, every 8 cycles, a new value is generated. This allows for firmware to control the actual transmission speed.

The relative position between the source data pin and source clock pin can be controlled via skew CSRs, one for the source data pin and one for the source clock pin, to compensate for any electrical transmission difference between two wires across dies. The relative value between the two CSRs controls the real skew. The TX FSM generates two different outputs with a predetermined skew in between.

The TX FSM possesses a credit to send a flit. Therefore, if the TX FSM does not have a credit for a predetermined amount of time, controlled via a CSR, the TX FSM can trigger a timeout error, record the error, and recover to the functional idle mode. The initial value of the credit counter of the TX FSM can be one. The TX FSM can generate a parity bit for detecting errors and can send along with the other information. A programmable value, defined by a CSR, determines a quiet period between two valid flits to allow the RX FSM to identify flit boundaries.

The RX FSM is configured as a deserializer of received data. The RX FSM also performs error detection, e.g., parity checking, and has timeout functionality. The RX FSM can extract data from the target data pin via detecting the clock edge of the target clock pin. Once detected, the RX FSM samples the data in the same cycle. As an example, the negative edge of the target clock pin can be used to account for the potential skew between the target clock pin and target data pin and avoid potentially sampling the wrong data.

For example, if the RX FSM does not receive an entire packet in a predetermined amount of time, the RX FSM may trigger a timeout error and record the error. The RX FSM can drop the data of the packet already received and reset itself. The RX FSM does not send a credit back to the TX FSM, which causes the TX FSM to time out as well. The RX FSM may also include a parity check for error detection, controllable via a CSR. If a parity error is detected, the RX FSM drops the entire packet, resets itself to an initial state, and does not send a credit to the TX FSM.

The RX FSM samples the data from the target data pin after detecting the clock edge of the target clock pin. After the first bit sample occurs, a timeout counter initiates. At the end of packet reception, a parity check can be performed and issue an error if any abnormality is detected.

The SSBI includes various paths to access and send any cross-die traffic. The paths may include control paths to access internal D2D CSRs as well as data paths of various protocols being sent over the SSBI. The paths may also include a path to access regions outside D2D across the die. SSBI can be the path to use before other interfaces are set up. Once those other interfaces are set up, the SSBI can include a switch register to switch some paths over to the other interfaces.

For example, the data paths can include a path for the APB protocol to access cross die D2D subsystem registers on remote die. An APB request including data can be received by the APB target interface converter and flopped inside the protocol handler. The APB request can be chosen by a protocol arbiter and sent to the link layer. The TX FSM can parse the data, serialize the data, and send the data through the source clock pin and source data pin. The RX FSM of a remote die can receive the data through the target clock pin and target data pin and deserialize the data. The request can be routed to the APB initiator interface converter of the remote die. The APB initiator interface converter can issue an APB request and can receive a response at a later point in time. The APB response is sent flopped inside the protocol handler of the remote die. The APB response can be chosen by the protocol arbiter of the remote die and sent to the link layer. The TX FSM of the remote die can serialize the APB response, send it across the die, and an RX FSM can deserialize the response. The output of the RX FSM can be decoded and routed to a read response port of the APB target interface converter via a demultiplexer.

As another example, the data paths can include a path for a user-defined protocol to route the user-defined type of traffic across the die. The user-defined type of traffic is received via a target interface, one flit at a time via valid/credit flow control. The flit gets packetized, waits for a grant from the protocol arbiter, and is sent across the die via the link layer. The flit gets restored to its original format and issued downstream via an initiator interface.

SSBI interfaces include CSR accesses, e.g., bus to register or register to bus, system on chip chassis interfaces, e.g., interrupt or error reporting, protocol interfaces, e.g., initiator and target, and die interfaces, e.g., output pins and input pins. A target can receive transactions from an initiator that initiates transactions. The output pins can include source clock and source data, and the input pins can include target clock and target data connecting to on-chip general purpose input/outputs.

The SSBI logic on the same die can run at the same clock and reset domain while SSBIs on different dies can run at different frequencies with different phases, as long they are fast enough to detect an edge transition on the source clock and target clock pins to allow for accurate sampling of data on the source data and target data pins. For example, the target clock can have a frequency at least ten times greater than the frequency of the source clock.

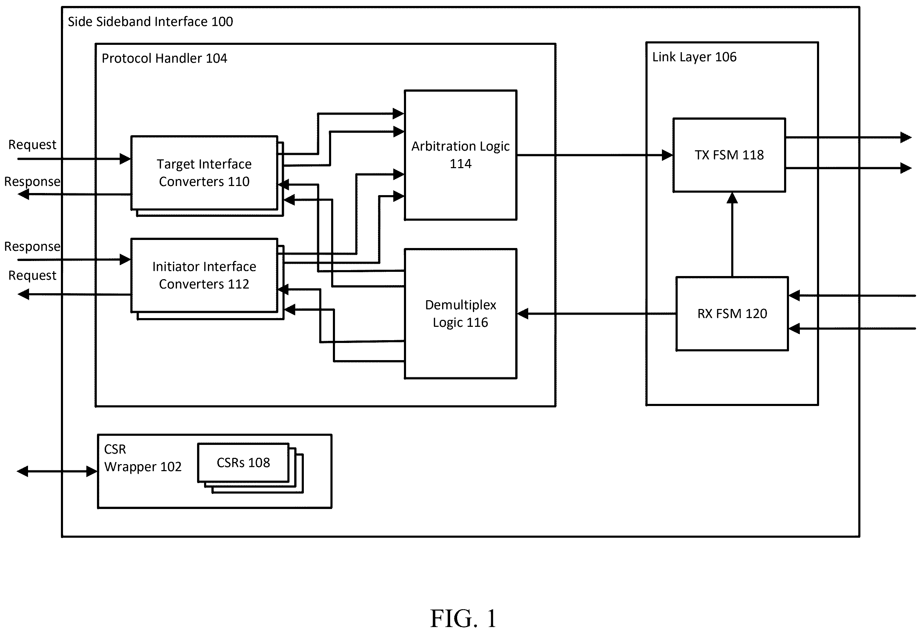

FIG. 1 depicts a block diagram of an example SSBI 100 for D2D communication. For example, two or more SSBIs can be implemented on an integrated circuit or system on chip (SoC). The integrated circuit or SoC can be mounted on a printed circuit board (PCB) as part of a server, such as in a datacenter.

The SSBI 100 includes a CSR wrapper 102, a protocol handler 104, and a link layer 106. The CSR wrapper 102 contains a plurality of CSRs 108 for configuring the link layer 106 of the SSBI 100. For example, the CSR wrapper 102 includes CSRs 108 for source clock pin frequency, source clock pin skew, source data pin skew, wait period between flits, transmission timeout value, transmission timeout error value, ingress timeout value, ingress timeout error value, egress timeout value, egress timeout error value, parity check enablement, parity error value, and/or link layer status value. The CSR wrapper 102 allows for flexible configurations, including data transfer rate, timeout duration, receiver sampling delay, parity checks, and/or any other parameters.

The protocol handler 104 includes one or more target interface converters 110, one or more initiator interface converters 112, arbitration logic 114, and demultiplex logic 116 for converting various protocols into a streaming protocol as well as performing arbitration or demultiplexing on various transactions. The streaming protocol can be any flow control interface, e.g., valid/ready, valid/credit, and/or req/ack, for communicating with the link layer 106. The various protocols can be any industry standard or proprietary protocols, such as APB, AXI, and/or user-defined protocols. The target interface converters 110 and initiator interface converters 112 can support the same or different protocols of the various protocols. The protocol handler 104 allows for accommodating a wide range of bus protocols, including any industry standard protocols and/or proprietary or user-defined protocols.

The target interface converters 110 can receive requests for transactions, such as read or write requests. The requests can be in any of the various protocols. The target interface converters 110 can convert the requests from one of the various protocols into the streaming protocol and send to the arbitration logic 114. The target interface converters 110 can further receive cross-die responses for the transactions, such as read or write responses from a second SSBI in communication with the SSBI 110. The target interface converters 110 can receive the cross-die responses from the demultiplex logic 116. The cross-die responses can be in the streaming protocol. The target interface converters 110 can convert the cross-die responses from the streaming protocol into one of the various protocols for output.

As an example, the target interface converters 110 can include a timeout feature to assert an error interrupt when a response is not received from the demultiplex logic 116 within a predetermined amount of time. The predetermined amount of time can be configured via a CSR 108 in the CSR wrapper 102.

The initiator interface converters 112 can receive cross-die requests for transactions, such as read or write requests from the second SSBI in communication with the SSBI 100. The initiator interface converters 110 can receive the cross-die requests from the demultiplex logic 116. The cross-die requests can be in the streaming protocol. The initiator interface converters 112 can convert the cross-die requests from the streaming protocol into one of the various protocols for output. The initiator interface converters 112 can further receive responses for transactions, such as read or write responses. The responses can be in any of the various protocols. The initiator interface converters 112 can convert the responses from one of the various protocols into the streaming protocol and send to the arbitration logic 114. As an example, the initiator interface converters 112 can include a timeout feature to assert an error interrupt when a request is not received from the demultiplex logic 116 within a predetermined amount of time. The predetermined amount of time can be configured via a CSR 108 in the CSR wrapper 102.

The target interface converters 110 and initiator interface converters 112 can each support one or more outstanding transactions. The target interface converters 110 and initiator interface converters 112 can each wait until a response comes back or a timeout occurs to free themselves for the next transaction. If a timeout occurs, the target interface converters 110 and initiator interface converters 112 can output an error response to inform there is a malfunction before resetting themselves to an idle state.

The arbitration logic 114 can be configured to arbitrate any incoming requests or responses from the target interface converters 110 and initiator interface converters 112 and output a selected request or response to the link layer 106. For example, the arbitration logic 114 can be a protocol arbiter configured to implement a round-robin arbitration scheme. The arbitration scheme can be configurable via a CSR 108 in the CSR wrapper 102. The arbitration logic 114 can include a plurality of ingress ports to respectively connect to the target interface converters 110 and initiator interface converters 112 and an egress port to connect to the link layer 106. Each ingress ports can support the same or different protocols and can have the same or different data widths. The egress port can have a fixed data width. The arbitration logic 114 can further include flow control signals and a data interface to connect to the link layer 106.

The demultiplex logic 116 can be configured to receive outgoing requests or responses from the link 106 and output the requests or responses to one of the target interface converters 110 or initiator interface converters 112 based on the type of transaction. For example, the demultiplex logic 116 can be a demultiplexer configured to distribute the requests or responses based on the type of transaction specified in the request or response. The demultiplex logic 116 can include an ingress port to connect to the link layer 106 and a plurality of egress ports to respectively connect to the target interface converters 110 and initiator interface converters 112. Each egress port can support the same or different protocols.

The link layer 106 includes a TX FSM 118 and a RX FSM 120 for serializing data to be transmitted to the second SSBI, deserializing data being received from the second SSBI, and maintaining a credit-based flow control. The link layer can be protocol agnostic. For example, the link layer can support the streaming protocol.

The TX FSM 118 can be configured to serialize transactions bit by bit until there is no more data to sample. The TX FSM 118 can contain a credit when there is no transaction and does not contain the credit when the transaction is in progress. The TX FSM 118 can be configured to trigger a timeout error if the TX FSM 118 does not contain the credit for a predetermined amount of time. The predetermined amount of time can be configured via a CSR 108 in the CSR wrapper 102.

The RX FSM 120 can be configured to deserialize transactions bit by bit until there is no more data to sample. The RX FSM 120 can be configured to trigger a timeout error if the RX FSM 120 does not deserialize the transaction within a predetermined amount of time. The predetermined amount of time can be configured via a CSR 108 in the CSR wrapper 102. If the timeout error, or another error, is triggered, the RX FSM 120 can be configured to drop the transaction in progress. The RX FSM 120 does not send a credit back to the TX FSM 118, which consequently can trigger the TX FSM 118 to timeout as well.

The link layer 106 allows for efficiently communicating between dies of an integrated circuit or SoC, with speeds up to 100 MHz as an example. The link layer 106 further allows for communication between dies without requiring clock synchronization. The link layer 106 also allows for preventing traffic loss through the credit-based flow control and self-correcting error mechanisms.

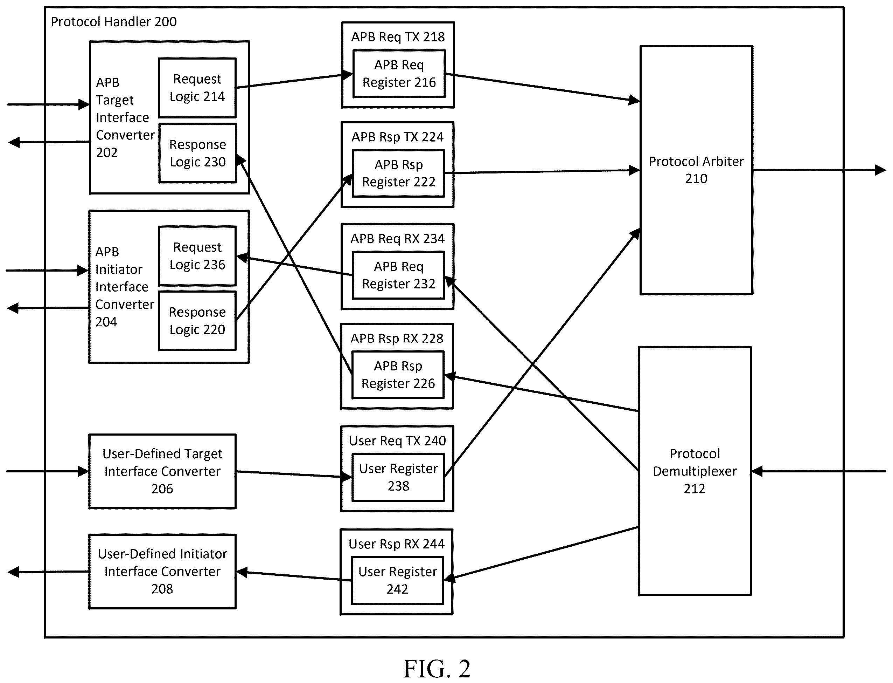

FIG. 2 depicts a block diagram of an example protocol handler 200. The protocol handler 200 can correspond to the protocol handler 104 as depicted in FIG. 1. The protocol handler 200 includes an APB target interface converter 202, an APB initiator interface converter 204, a user-defined target interface converter 206, and a user-defined initiator interface converter 208. It should be noted these converter types are just examples and the protocol handler 200 can include any number of target interface converters and initiator interface converters of the same or different protocols. The protocol handler 200 further includes a protocol arbiter 210 and a protocol demultiplexer 212. It should be noted the arbiter and demultiplexer are just examples and the protocol handler 200 can include any arbitration logic and demultiplex logic.

The APB target interface converter 202 can receive a transaction request in the APB protocol and convert the transaction request to the streaming protocol using request logic 214. The APB target interface converter 202 can output the transaction request to an APB register 216 in an APB request transmitter 218 for selection by the protocol arbiter 210.

The APB initiator interface converter 204 can receive a transaction response in the APB protocol and convert the transaction response to the streaming protocol using request logic 220. The APB initiator interface converter 204 can output the transaction response to an APB response register 222 in an APB response transmitter 224 for selection by the protocol arbiter 210.

The APB target interface converter 202 can receive a transaction response in the streaming protocol from an APB response register 226 in an APB response receiver 228 after being output by the protocol demultiplexer 212. The APB target interface converter 202 can convert the transaction response to the APB protocol using response logic 230.

The APB initiator interface converter 204 can receive a transaction request in the streaming protocol from an APB request register 232 in an APB request receiver 234 after being output by the protocol demultiplexer 212. The APB initiator interface converter 204 can convert the transaction request to the APB protocol using request logic 236.

The user-defined target interface converter 206 can receive a transaction request in the user-defined protocol and convert the transaction request to the streaming protocol. The user-defined target interface converter 206 can output the transaction request to a user-defined register 238 in a user-defined request transmitter 240 for selection by the protocol arbiter 210. The user-defined initiator interface converter 208 can receive a transaction response in the streaming protocol from a user-defined request register 242 in a user-defined response receiver 244 after being output by the protocol demultiplexer 212. The user-defined initiator interface converter 208 can convert the transaction response to the user-defined protocol.

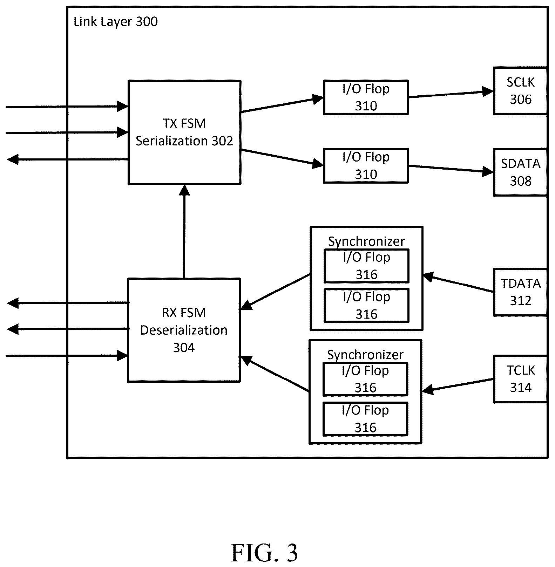

FIG. 3 depicts a block diagram of an example link layer 300. The link layer 300 can correspond to the link layer 106 as depicted in FIG. 1. The link layer includes a TX FSM 302 for serialization and an RX FSM 304 for deserialization. The TX FSM 302 can be connected to a source clock pin 306 and a source data pin 308 through one or more flip flops 310 for outputting transactions bit by bit. The source clock pin 306 and source data pin 308 can respectively be connected to a target clock pin and a target data pin of the link layer of a second SSBI for communication with the second SSBI. The RX FSM 304 can be connected to a target data pin 312 and a target clock pin 314 through one or more flip flops 316 for synchronizing received transactions to be deserialized bit by bit. The target clock pin 314 and target data pin 312 can respectively be connected to a source data pin and a source clock pin of the link layer of the second SSBI for communication with the second SSBI.

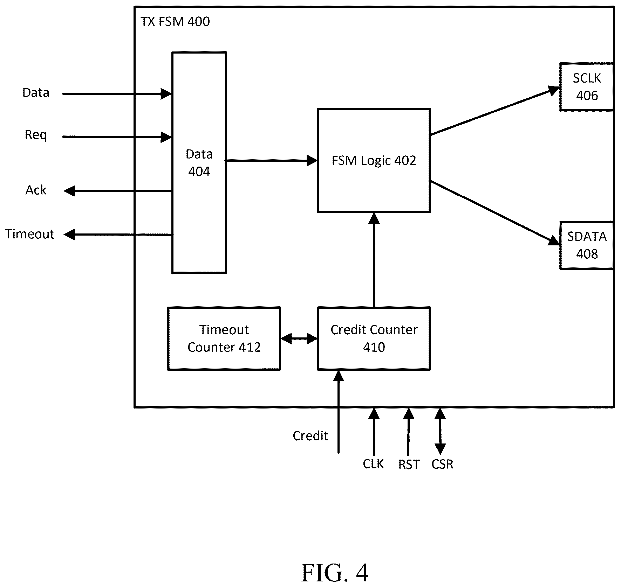

FIG. 4 depicts a block diagram of an example TX FSM 400. The TX FSM 400 can correspond to the TX FSM 302 as depicted in FIG. 3. The TX FSM 400 includes FSM logic 402 for serializing the data 404 of received transactions and outputting the data through a source clock pin 406 and source data pin 408. The TX FSM logic 402 uses request/acknowledgement flow control. A request is asserted when there is a valid flit for cross die transfer and an acknowledgement is asserted when the transaction is complete.

The transaction can be completed when the TX FSM 400 receives a credit back through a credit counter 410. The credit counter 410 determines whether the TX FSM 400 contains a credit or not. The credit indicates whether the TX FSM 400 is available to process a transaction or unavailable because the TX FSM 400 is currently processing a transaction.

A timeout counter 412 can be connected to the credit counter 410 to determine whether an acknowledgement is asserted within a predetermined amount of time. The predetermined amount of time can be configured in a CSR of the CSR wrapper. If an acknowledgement is not asserted within the predetermined amount of time or the TX FSM 400 does not contain a credit for the predetermined amount of time, the TX FSM 400 can assert a timeout indicating the current transaction did not complete correctly. This could be due to an erroneous transaction or a parity error, as examples.

The TX FSM logic 402 serializes input data through the source data pin 408 bit by bit while the source clock pin 406 is configured as a strobe to indicate the current cycle has valid data to sample. The frequency and relative skew of the source clock pin and source data pin can be configured via CSRs in the CSR wrapper.

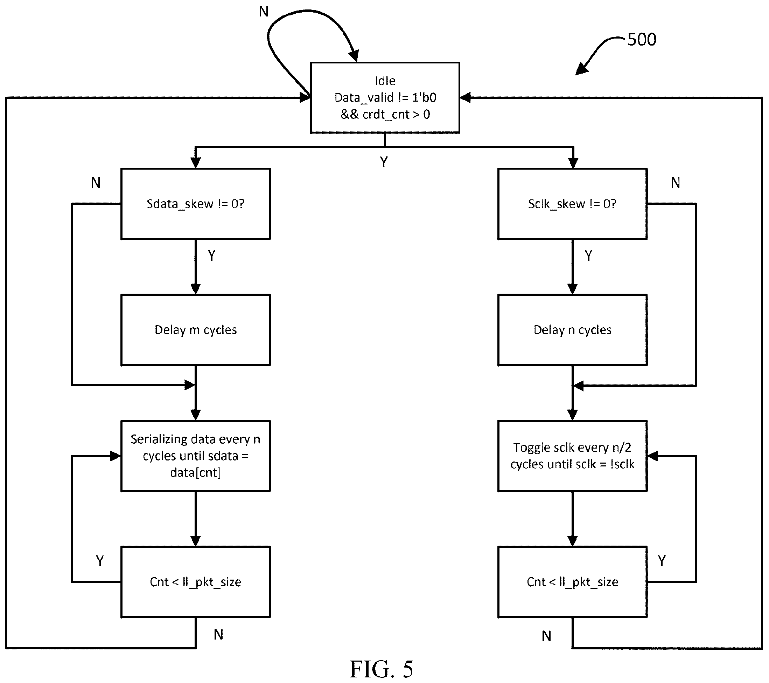

FIG. 5 depicts a block diagram of example TX FSM logic 500 implemented by a TX FSM, such as the TX FSM 400 as depicted in FIG. 4. The TX FSM 400 starts in an idle state containing a credit until it receives a transaction to process, e.g., has valid data to transfer cross-die and has a credit to be used for the transmission. The TX FSM 400 then processes a transaction through the source clock pin and the source data pin with a predetermined skew therebetween by delaying the source clock pin and source data pin according to predetermined skew values. The source clock pin generates a toggling strobe while the source data pin generates serialized data. When the transaction is complete, the TX FSM 400 returns to the idle state.

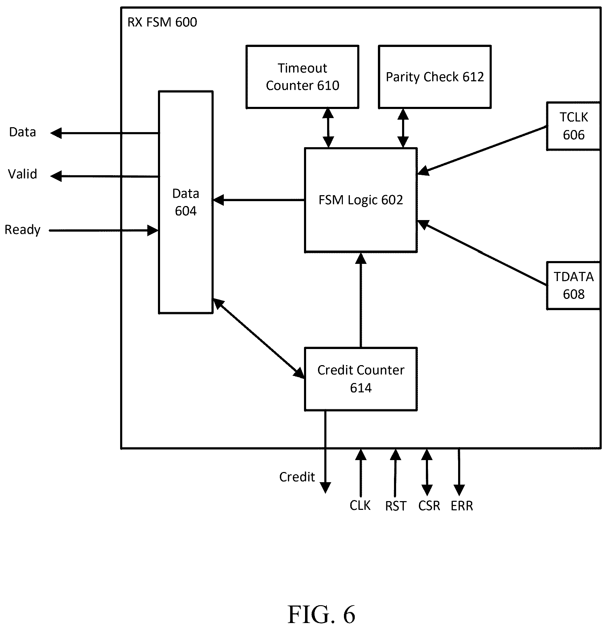

FIG. 6 depicts a block diagram of an example RX FSM 600. The RX FSM 600 can correspond to the RX FSM 304 as depicted in FIG. 3. The RX FSM 600 includes FSM logic 602 for deserializing the data 604 of received transactions from a target clock pin 606 and target data pin 608 and outputting the data 604 to the protocol handler. The RX FSM 600 can extract data from the target data pin 608 and sample the data according to clock cycles based on the target clock pin 606.

The RX FSM 600 includes a timeout counter 610 for determining whether the RX FSM 600 completes a transaction within a predetermined amount of time. The predetermined amount of time can be configured via a CSR of the CSR wrapper. If the transaction is not completed within the predetermined amount of time, the RX FSM 600 can drop the transaction, record the error, and reset itself. The RX FSM 600 may further include a parity checker 612 for detecting any error related to the accuracy of the transaction. If a parity error is detected, the RX FSM 600 can drop the transaction, record the error, and reset itself.

The RX FSM 600 also includes a credit counter 614 determines whether the RX FSM 600 contains a credit or not. The credit indicates whether the RX FSM 600 is currently processing a transaction or available to process a transaction. If a timeout or other error occurs, the RX FSM 600 does not send the credit back to the TX FSM, causing an error to occur in the TX FSM as well.

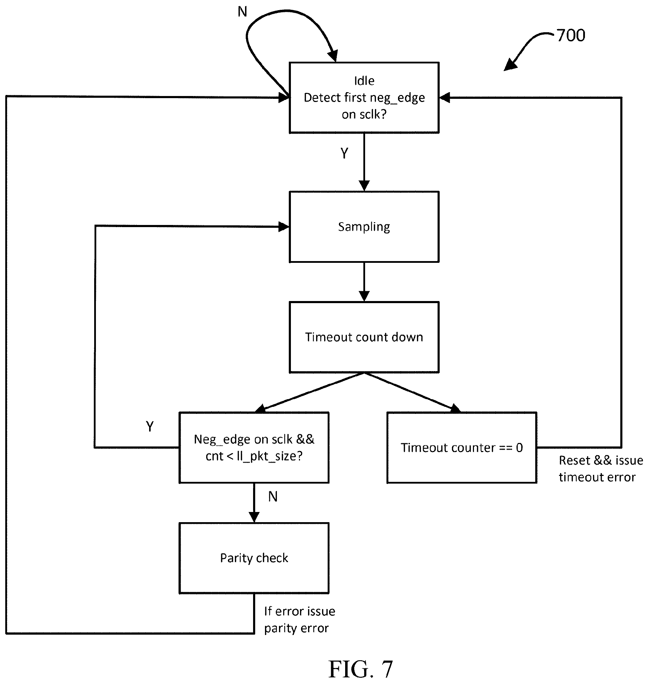

FIG. 7 depicts a block diagram of example RX FSM logic 700 implemented by a RX FSM, such as the RX FSM 600 as depicted in FIG. 6. The RX FSM 600 starts in an idle state until it receives a transaction to process. After detecting the clock edge of the target clock pin, the RX FSM 600 samples data of the transaction while a timeout count down occurs. If all the data from the transaction is sampled before the timeout count down is finished, a parity check can occur to ensure accuracy of the transaction. If the transaction does not complete before the timeout count down is finished, the RX FSM 600 resets and issues a timeout error.

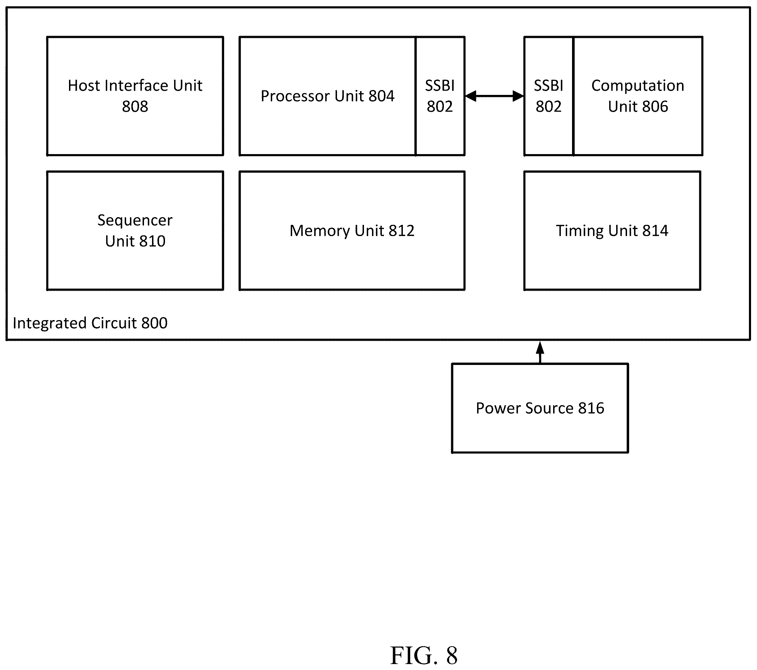

FIG. 8 depicts a block diagram of an example integrated circuit 800 implementing example SSBIs 802 for D2D communication. As depicted, the SSBIs 802 are implemented between a processor unit 804 and a computation unit 806, though the SSBIs 802 may also be implemented between other units within the integrated circuit 800.

The integrated circuit 800 can include a host interface unit 808, sequencer unit 810, memory unit 812, and a timing unit 814, in addition to the processor unit 804 and computation unit 806. The integrated circuit 800 can be mounted on a printed circuit board (PCB) as part of a server, such as in a datacenter.

The processor unit 804 and memory unit 812 can be any of a variety of different types of processors and memory. In some examples, the processor unit 804 can receive instructions that are executable by the computation unit 806 for processing data. The instructions can be part of a computer program written for any of a variety of operations using the computation unit 806, as an example.

The sequencer unit 810 can convert the received instructions into one or more signals understood by the computation unit 806 which causes the computation unit 806 to perform any of the variety of operations. The sequencer unit 810 can also be configured to generate one or more control signals for controlling when instructions are pushed to the computation unit 806.

The host interface unit 808 can be configured to receive data from outside the integrated circuit 800, e.g., from one or more processors or other devices, and send data generated by the computation unit 806 to outside the integrated circuit 800, e.g., to one or more processors or other devices.

The timing unit 814 can be configured to control timing of the computation unit 806, e.g., its clock frequency or clock rate. For example, operations performed by the computation unit 806 may be performed once per clock cycle, with such clock cycles managed by the timing circuit 814.

The integrated circuit 800 can also be connected to a power source 816. The power source 816 can be a battery or other form of power available on a host device implementing the integrated circuit 800 or can be a source external to the host device and connected to the host device and the integrated circuit 800 through some wireless or physical connection, e.g., through wires. The power source 816 can supply voltage to the computation unit 806, which can be managed, e.g., adjusted higher or lower, by the processors 804.

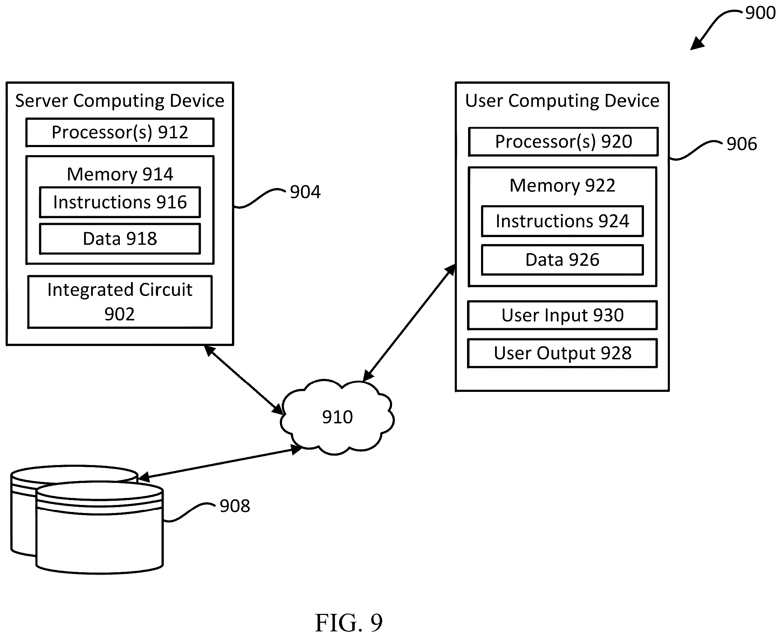

FIG. 9 depicts a block diagram of an example environment 900 for implementing an integrated circuit 902 that includes SSBI. The integrated circuit 902 can correspond to the integrated circuit 800 as depicted in FIG. 8. The integrated circuit 902 can be implemented in server computing device 904. User computing device 906 and the server computing device 904 can be communicatively coupled to one or more storage devices 908 over a network 910. The storage devices 908 can be a combination of volatile and non-volatile memory and can be at the same or different physical locations than the computing devices 904, 906. For example, the storage devices 908 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 904 can include one or more processors 912 and memory 914. The memory 914 can store information accessible by the processors 912, including instructions 916 that can be executed by the processors 912. The memory 914 can also include data 918 that can be retrieved, manipulated, or stored by the processors 912. The memory 914 can be a type of non-transitory computer readable medium capable of storing information accessible by the processors 912, such as volatile and non-volatile memory. The processors 912 can include one or more central processing units (CPUs), graphic processing units (GPUs), field-programmable gate arrays (FPGAs), and/or application-specific integrated circuits (ASICs), such as tensor processing units (TPUs).

The instructions 916 can include one or more instructions that when executed by the processors 912, causes the one or more processors 912 to perform actions defined by the instructions 916. The instructions 916 can be stored in object code format for direct processing by the processors 912, or in other formats including interpretable scripts or collections of independent source code modules that are interpreted on demand or compiled in advance. The instructions 916 can include instructions for implementing the data processing system 902 for error detection as described herein. The data processing system 902 can be executed using the processors 912, and/or using other processors remotely located from the server computing device 904.

The data 918 can be retrieved, stored, or modified by the processors 912 in accordance with the instructions 916. The data 918 can be stored in computer registers, in a relational or non-relational database as a table having a plurality of different fields and records, or as JSON, YAML, proto, or XML documents. The data 918 can also be formatted in a computer-readable format such as, but not limited to, binary values, ASCII or Unicode. Moreover, the data 918 can include information sufficient to identify relevant information, such as numbers, descriptive text, proprietary codes, pointers, references to data stored in other memories, including other network locations, or information that is used by a function to calculate relevant data.

The user computing device 906 can also be configured similarly to the server computing device 904, with one or more processors 920, memory 922, instructions 924, and data 926. The user computing device 906 can also include a user output 928 and a user input 930. The user input 930 can include any appropriate mechanism or technique for receiving input from a user, such as keyboard, mouse, mechanical actuators, soft actuators, touchscreens, microphones, and sensors.

The server computing device 904 can be configured to transmit data to the user computing device 906, and the user computing device 906 can be configured to display at least a portion of the received data on a display implemented as part of the user output 928. The user output 928 can also be used for displaying an interface between the user computing device 906 and the server computing device 904. The user output 928 can alternatively or additionally include one or more speakers, transducers or other audio outputs, a haptic interface or other tactile feedback that provides non-visual and non-audible information to the platform user of the user computing device 906.

Although FIG. 9 illustrates the processors 912, 920 and the memories 914, 922 as being within the computing devices 904, 906, components described herein can include multiple processors and memories that can operate in different physical locations and not within the same computing device. For example, the processors 912 can include a collection of processors that can perform concurrent and/or sequential operation.

The server computing device 904 can be configured to receive requests to process data from the user computing device 906. For example, the environment 900 can be part of a computing platform configured to provide a variety of services to users, through various user interfaces and/or APIs exposing the platform services. The services can include error detection. The user computing device 906 may receive and transmit data specifying operations to be performed by the computation unit of the integrated circuit 902.

The computing devices 904, 906 can be capable of direct and indirect communication over the network 910. The computing devices 904, 906 can set up listening sockets that may accept an initiating connection for sending and receiving information. The network 910 itself can include various configurations and protocols including the Internet, World Wide Web, intranets, virtual private networks, wide area networks, local networks, and private networks using communication protocols proprietary to one or more companies. The network 910 can support a variety of short- and long-range connections. The short- and long-range connections may be made over different bandwidths, such as 2.402 GHz to 2.480 GHz (commonly associated with the Bluetooth^{®} standard), 2.4 GHz and 11 GHz (commonly associated with the Wi-Fi^{®} communication protocol); or with a variety of communication standards, such as the LTE^{®} standard for wireless broadband communication. The network 910, in addition or alternatively, can also support wired connections between the computing devices 904, 906, including over various types of Ethernet connection.

Although a single server computing device 904, user computing device 906, and data processing system 902 are shown in FIG. 9, it is understood that aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof. In some examples, one or more devices implement one or more integrated circuits according to aspects of the disclosure.

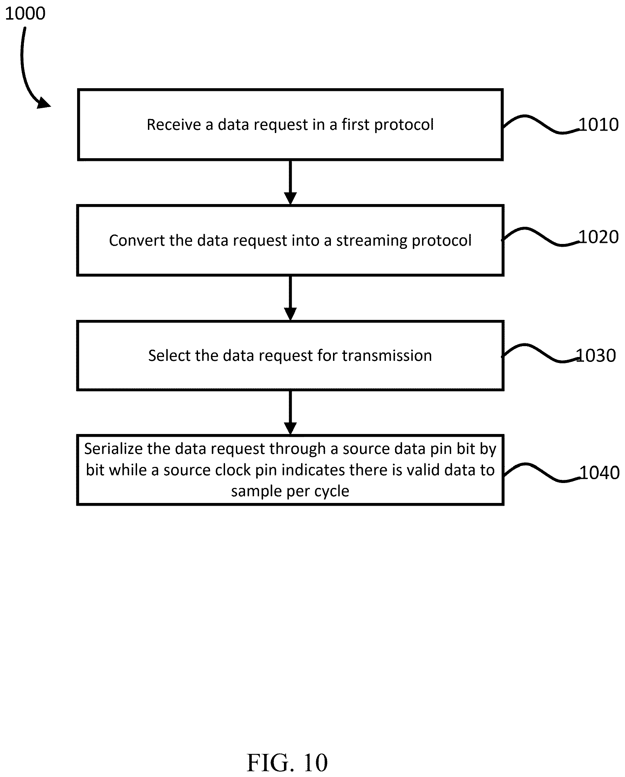

FIG. 10 depicts a flow diagram of an example process for transmitting data requests using a SSBI, such as the SSBI 100 as depicted in FIG. 1.

As shown in block 1010, the target interface converter 110 receives a data request in a first protocol. Example protocols for the first protocol can include APB, AXI, and/or user-defined protocols.

As shown in block 1020, the target interface converter 110 converts the data request from the first protocol into a streaming protocol. Example streaming protocols can include APB, AXI, and/or user-defined protocols. The target interface converter 110 can trigger a timeout error if a data response is not received within a predetermined amount of time.

As shown in block 1030, the protocol arbiter 114 selects the data request for transmission. For example, the protocol arbiter can select the data request via a round-robin scheme.

As shown in block 1040, the TX FSM 118 serializes the data request through a source data pin bit by bit while a source clock pin indicates there is valid data to sample per cycle. The TX FSM can trigger a timeout error if the TX FSM does not contain a credit for a predetermined amount of time. Not containing the credit indicates the TX FSM is currently processing the data request.

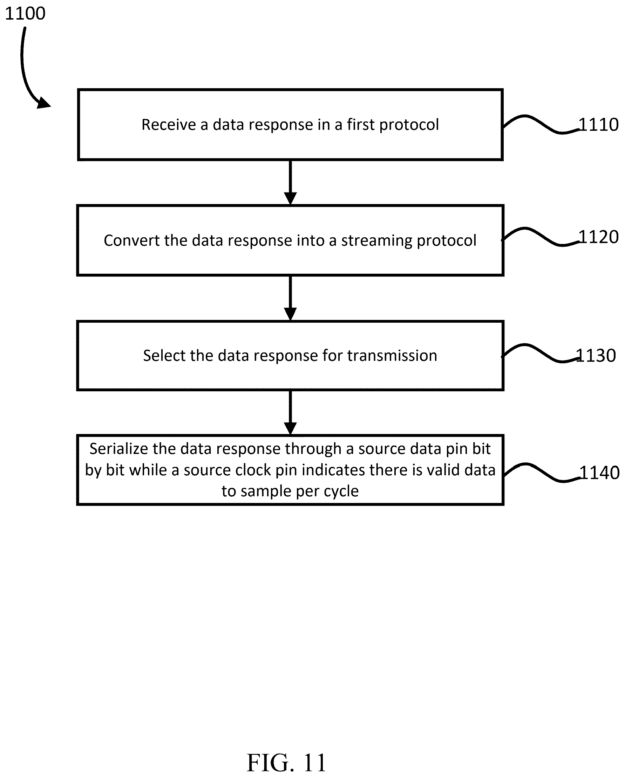

FIG. 11 depicts a flow diagram of an example process for transmitting data responses using a SSBI, such as the SSBI 100 as depicted in FIG. 1.

As shown in block 1110, the initiator interface converter 112 receives a data response in a first protocol. Example protocols for the first protocol can include APB, AXI, and/or user-defined protocols.

As shown in block 1120, the initiator interface converter 112 converts the data response from the first protocol into a streaming protocol. Example streaming protocols can include APB, AXI, and/or user-defined protocols.

As shown in block 1130, the protocol arbiter 114 selects the data response for transmission. For example, the protocol arbiter can select the data response via a round-robin scheme.

As shown in block 1140, the TX FSM 118 serializes the data response through a source data pin bit by bit while a source clock pin indicates there is valid data to sample per cycle. The TX FSM can trigger a timeout error if the TX FSM does not contain a credit for a predetermined amount of time. Not containing the credit indicates the TX FSM is currently processing the data response.

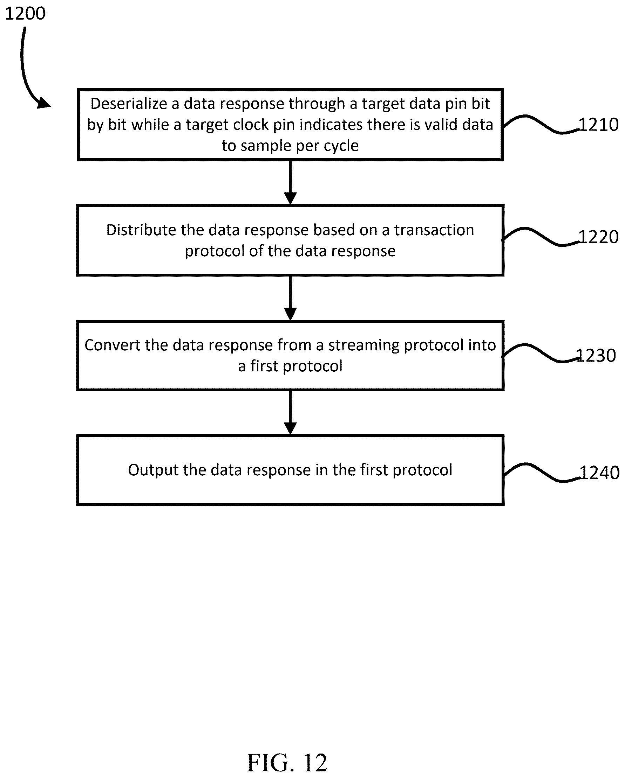

FIG. 12 depicts a flow diagram of an example process for receiving data responses using a SSBI, such as the SSBI 100 as depicted in FIG. 1.

As shown in block 1210, the RX FSM 120 deserializes a data response through a target data pin bit by bit while a target clock pin indicates there is valid data to sample per cycle. The RX FSM can trigger a timeout error if the RX FSM does not deserialize the data response within a predetermined amount of time. Based on the RX FSM triggering a timeout error, a TX FSM can trigger a timeout error as well.

As shown in block 1220, the protocol demultiplexer 116 distributes the data response based on a transaction protocol of the data response. For example, if the data response has an APB protocol, the protocol demultiplexer 116 distributes the data response to an APB target interface converter.

As shown in block 1230, the target interface converter 110 converts the data response from a streaming protocol into a first protocol. Example protocols for the first protocol can include APB, AXI, and/or user-defined protocols. Example streaming protocols can include APB, AXI, and/or user-defined protocols.

As shown in block 1240, the target interface converter 110 outputs the data response in the first protocol.

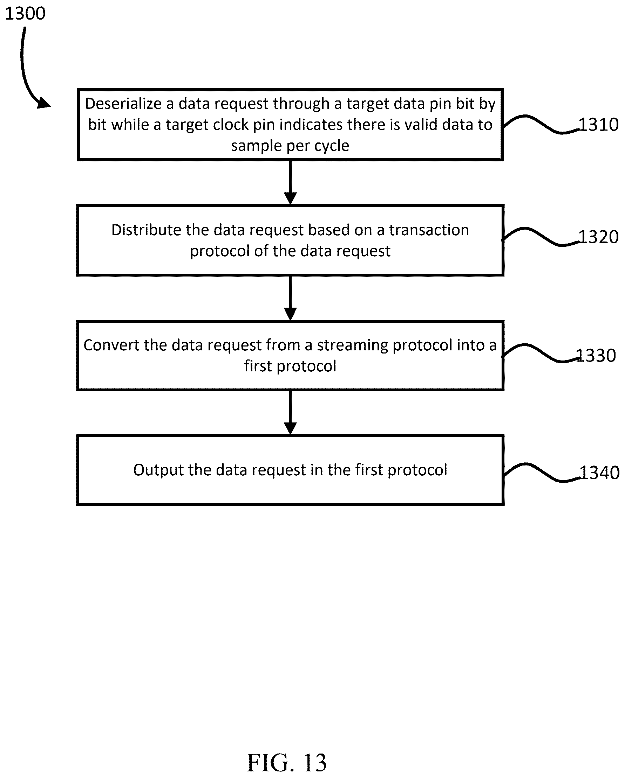

FIG. 13 depicts a flow diagram of an example process for receiving data requests using a SSBI, such as the SSBI 100 as depicted in FIG. 1.

As shown in block 1310, the RX FSM 120 deserializes a data request through a target data pin bit by bit while a target clock pin indicates there is valid data to sample per cycle. The RX FSM can trigger a timeout error if the RX FSM does not deserialize the data request within a predetermined amount of time. Based on the RX FSM triggering a timeout error, a TX FSM can trigger a timeout error as well.

As shown in block 1320, the protocol demultiplexer 116 distributes the data request based on a transaction protocol of the data response. For example, if the data request has an APB protocol, the protocol demultiplexer 116 distributes the data request to an APB target interface converter.

As shown in block 1330, the initiator interface converter 112 converts the data request from a streaming protocol into a first protocol. Example protocols for the first protocol can include APB, AXI, and/or user-defined protocols. Example streaming protocols can include APB, AXI, and/or user-defined protocols.

As shown in block 1340, the initiator interface converter 112 outputs the data request in the first protocol.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" or "data processing system" refers to data processing hardware and encompasses various apparatus, devices, and machines for processing data, including programmable processors, computers, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A side sideband interface (SSBI) comprising:
a protocol handler configured to convert multiple protocols into a streaming protocol and perform arbitration or demultiplexing on various transactions; and
a link layer comprising a plurality of finite state machines (FSMs) configured to serialize data to be transmitted, deserialize data being received, and maintain a credit-based flow control.

2. The SSBI of claim 1, further comprising a control status register (CSR) wrapper containing a plurality of CSRs for configuring the protocol handler and link layer.

3. The SSBI of claim 1 or claim 2, wherein the protocol handler further comprises a target interface converter configured to:
receive a data request in a first protocol and convert the request into the streaming protocol; and
receive a data response in the streaming protocol and convert the data response into the first protocol;
wherein the target interface converter is configured to assert an error interrupt when the data response is not received within a predetermined amount of time.

4. The SSBI of any one of claims 1 to 3, wherein the protocol handler further comprises an initiator interface converter configured to:
receive a data request in the streaming protocol and convert the data request into a first protocol; and
receive a data response in the first protocol and convert the response into the streaming protocol;
wherein the initiator interface converter is configured to assert an error interrupt when the data response is not received within a predetermined amount of time.

5. The SSBI of any one of claims 1 to 4, wherein the protocol handler further comprises a protocol arbitrator configured to receive a plurality of data requests and push a data request of the plurality of data requests to the link layer via a round-robin scheme; and/or
wherein the protocol handler further comprises a protocol demultiplexer configured to distribute data responses based on their transaction protocol.

6. The SSBI of any one of claims 1 to 5, wherein the link layer further comprises a source clock pin and a source data pin.

7. The SSBI of claim 6, wherein the link layer comprises a transmission FSM (TX FSM) configured to serialize a data request through the source data pin bit by bit while the source clock pin indicates there is valid data to sample per cycle; and
wherein optionally the TX FSM contains a credit when there is no data request to send and does not contain a credit when a transmission is in process, the TX FSM being configured to trigger a timeout error when the TX FSM does not contain the credit for a predetermined amount of time.

8. The SSBI of any one of claims 1 to 7, wherein the link layer further comprises a target clock pin and a target data pin.

9. The SSBI of claim 8, wherein the link layer comprises a receiver FSM (RX FSM) configured to deserialize a data response through the target data pin bit by bit while the target clock pin indicates there is valid data to sample per cycle; and
wherein optionally the RX FSM is configured to trigger a timeout error when the RX FSM does not receive a data packet within a predetermined amount of time; or
wherein optionally the RX FSM is configured to drop data of the data packet already received and not send a credit back to a TX FSM when an error is triggered.

10. A method for transmitting data via a side sideband interface (SSBI) comprising:
receiving, by a target interface converter of a protocol handler of the SSBI, a data request in a first protocol;
converting, by the target interface converter, the data request from the first protocol into a streaming protocol;
selecting, by a protocol arbiter of the protocol handler, the data request for transmission; and
serializing, by a transmitter finite state machine (TX FSM) of a link layer of the SSBI, the data request through a source data pin bit by bit while a source clock pin indicates there is valid data to sample per cycle.

11. The method of claim 10, further comprising:
receiving, by a target initiator converter of the protocol handler, a data response in the first protocol;
converting, by the target initiator converter, the data response from the first protocol into the streaming protocol;
selecting, by the protocol arbiter, the data response for transmission; and
serializing, by the TX FSM, the data response through the source data pin bit by bit while the source clock pin indicates there is valid data to sample per cycle.

12. The method of claim 10 or claim 11, further comprising triggering, by the target interface converter, a timeout error when a data response is not received within a predetermined amount of time; and/or
further comprising triggering, by the TX FSM, a timeout error when the TX FSM does not contain a credit for a predetermined amount of time.

13. A method for receiving data via a side sideband interface (SSBI) comprising:
deserializing, by a receiver finite state machine (RX FSM) of a link layer of the SSBI, a data response through a target data pin bit by bit while a target clock pin indicates there is valid data to sample per cycle;
distributing, by a protocol demultiplexer of a protocol handler of the SSBI, the data response based on a transaction protocol of the data response;
converting, by a target interface converter of the protocol handler, the data response from a streaming protocol into a first protocol; and
outputting, by the target interface converter, the data response in the first protocol.

14. The method of claim 13, further comprising:
deserializing, by the RX FSM, a data request through a target data pin bit by bit while a target clock pin indicates there is valid data to sample per cycle;
distributing, by the protocol demultiplexer, the data request based on a transaction protocol of the data request;
converting, by an initiator interface converter of the protocol handler, the data request from the streaming protocol into the first protocol; and
outputting, by the initiator interface converter, the data request in the first protocol.

15. The method of claim 13 or claim 14, further comprising triggering, by the RX FSM, a timeout error when the RX FSM does not deserialize the data response within a predetermined amount of time; and
further optionally comprising triggering, by a TX FSM of the link layer, a timeout error based on the RX FSM triggering a timeout error.
